# EUROPEAN PATENT APPLICATION

(11) **EP 4 183 608 A1**
(43) Date of publication of application: **24.05.2023**
(21) Application number: 21209967.5
(22) Date of filing: 23.11.2021
(51) Int. Cl.: B60K 7/00, B60K 17/00, B60K 17/04, B60K 17/06

(54) **A POWERTRAIN SUPPORT ARRANGEMENT, AND A MOBILE UNDER-GROUND MINING MACHINE**

(71) Applicant: Sandvik Mining and Construction Oy, 33330 Tampere (FI)
(72) Inventor: LAIHONEN, Esko, 33311 Tampere (FI); AHTIAINEN, Jouni, 33311 Tampere (FI); KITULA, Mikko, 33311 Tampere (FI); ILJIN, Tuomas, 33311 Tampere (FI)
(74) Representative: Sandvik

(57) **Abstract**

A powertrain support arrangement (1) of a mobile underground mining machine (100), wherein the arrangement (1) comprising an axle housing (6), arranged transversely to a longitudinal axis of the mobile underground mining machine (100), the axle housing (6) comprising a first end (7) and a second end (7'), on the first end of the axle housing is arranged a support surface (8) for a hub motor arrangement (30) and on the second end of the axle housing is arranged a support surface for a second hub motor arrangement (30), and wherein a space (17) for at least a part of the hub motor arrangement is arranged inside the axle housing

## Description

### FIELD OF THE INVENTION

The invention relates to a powertrain support arrangement of a mobile underground mining machine.

Further, the invention relates also to a mobile underground mining machine.

### BACKGROUND OF THE INVENTION

In a traditional powertrain system of mobile underground mining machines, a combustion engine or electric motor is connected to drive shafts, such as cardan axles, that transmit the power via axles to wheels. The traditional powertrain systems with drive shafts, such as cardan axles, need space that for example limits effective hauling capacity of a mobile underground mining machine. The traditional powertrain systems with drive shafts, such as cardan axles, may make the design, construction, assembly, and maintenance of the mobile underground mining machine difficult.

Mobile work machines, such as used in the construction, agriculture, forestry, mining, and other industries, are made for operation in off-road environments to carry or haul heavy loads. Such mobile work machines usually have a heavy-duty build with a heavy-duty power source providing power to various work implements and propelling the mobile work machine on wheels or tracks of various configurations. Various applications may require the mobile work machine to deliver high-torque, low-speed power to the wheels or tracks, or to various implements, in loaded operational conditions. At other times, relatively high-speed, low-torque operation may be required of these work vehicles, such as when unloaded and/or in transit. To facilitate both the high-torque demands at times and the high-speed demands at other times, the mobile work machines may have heavy-duty axle assemblies that incorporate or cooperate with various gear assemblies to provide a high-ratio gear reduction to the wheels or tracks. The axle assemblies may transmit power to the wheels or tracks solely from the prime mover, or they may be powered themselves. Powered axle assemblies have one or more embedded electric or hydraulic drives that are powered by the primary power source to directly drive the wheels or tracks that propel the mobile work machine.

### OBJECTIVE OF THE INVENTION

An objective of the invention is to alleviate the disadvantages mentioned above and to provide a novel powertrain support arrangement of a mobile underground mining machine.

Another further objective is to provide a mobile underground mining machine with a powertrain support arrangement with a hub motor arrangement.

### SUMMARY

The disclosure provides a powertrain support arrangement having support arrangements for hub motors. The disclosure provides a powertrain support arrangement of a mobile work machine, such as for a mobile underground mining machine.

According to a first aspect, the present invention provides a powertrain support arrangement of a mobile underground mining machine.

According to the invention the arrangement comprising an axle housing, arranged transversely to a longitudinal axis of the mobile underground mining machine, the axle housing comprising a first end and a second end, on the first end of the axle housing is arranged a support surface for a hub motor arrangement and on the second end of the axle housing is arranged a support surface for a second hub motor arrangement, and wherein a space for at least a part of the hub motor arrangement is arranged inside the axle housing.

The technical effect is that the axle housing provides protected space for at least a part of the hub motor arrangement. Furthermore, the arrangement provides a compact solution for the powertrain support arrangement. The further technical effect is that the powertrain support arrangement may be a compact powertrain arrangement for electric mobile work machines, especially for mobile underground mining machines.

The powertrain support structure is characterized by what is stated in the independent claim.

Some other embodiments are characterized by what is stated in the other claims.

Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an embodiment of the powertrain support arrangement the axle housing may be arranged on a frame of the mobile underground mining machine. The support arrangement may be, depending on the embodiment, arranged fixedly mounted to the frame, for example by welding. An advantage is that the axle housing may be made compact and suitable for withstand forces such as torque of the mobile underground mining machine. The powertrain support arrangement with the hub motor arrangement is capable of achieving the requisite torque and speed characteristics to drive the wheels of high load capacity. The axle housing may be of heavy-duty construction to support the loads on the mobile underground mining machine.

In an embodiment of the powertrain support arrangement the axle housing may be arranged on a frame of the mobile underground mining machine to be swing and/or rotate in relation to an oscillating axis of the powertrain support arrangement. An advantage is that the powertrain arrangement may be arranged rather easily to well proven structures, such as cradles, to able to oscillate the axle housing and the hub motor arrangement, as needed. A further advantage is that the arrangement may be modified to be utilised in present machines, especially as a rear axle of the machine. On the other hand, when utilising the arrangement structures of the frame of the machine may be designed to be simpler when compared to the prior art structures.

In an embodiment of the powertrain support arrangement the axle housing may be a tube part, wherein the space may be a channel space arranged inside a wall of the axle housing. An advantage is that arranging the axle housing from a tube or a pipe part a simple and compact form, for example a cylindrical annular shape, may be achieved to the axle housing. The cylindrical annular shape may be suitable to support loads on the mobile underground mining machine.

In an embodiment of the powertrain support arrangement an electric motor of the first hub motor arrangement may be arranged in the space of the axle housing and attached in the first end of the axle housing and/or an electric motor of the second hub motor arrangement may be arranged in the space of the axle housing and attached in the second end of the axle housing. An advantage is that the powertrain support arrangement having the axle housing provides a compact solution and structure for support the hub motor arrangement. The hub motor may be arranged in the space of the axle housing. The axle housing provides a shield and shelter to the electric motor(s) of the hub motor arrangement(s) and cablings.

In an embodiment of the powertrain support arrangement the axle housing may be arranged to the frame of the mobile underground mining machine via a structure that may comprise an outboard support, an inboard support, and a lower support. The outboard support and the inboard support may be arranged at a distance from each other, and the lower support may be arranged to extend between the outboard support and the inboard support connecting the outboard support to the inboard support. An advantage is that the axle housing may be fixedly mounted to the frame, by support parts e.g., by the outboard support, and the inboard support. A firm connection may be formed between the axle housing and the support parts and the frame. The connection may be configured according to the embodiment to withstand forces and stress directed to the powertrain support arrangement of the mobile underground mining machine.

In an embodiment of the powertrain support arrangement the axle housing may be arranged to the frame of the mobile underground mining machine via a plurality of structures, each of the structures may comprise an outboard support, an inboard support and a lower support, the inboard support and the outboard support may be arranged at a distance from each other, and the lower support may be arranged to extend between the outboard support and the inboard support. An advantage is that the powertrain support structure may be configured to be connected to different kinds of frames having e.g., a plurality of longitudinal frame members.

In an embodiment of the powertrain support arrangement the outboard support may be arranged to or may be a part of an outboard side of the frame, and the inboard support may be arranged on or may be a part of an inboard side of the frame, and the lower support may be arranged on or may be a part of a lower part of the frame. An advantage is that the outboard support, inboard support, and the lower support may be made of plate parts that are easy to manufacture and easy to weld to the frame. In an embodiment the outboard support, the inboard support and/or the lower support may be made as a part of the frame.

In an embodiment of the powertrain support arrangement the powertrain may comprise a hub motor arrangement, comprising further a counter surface for the support surface for fastening the hub motor arrangement to the end of the axle housing. An advantage is that the hub motor arrangement is easy to connect firmly to the axle housing by fastening elements, such as nuts and bolts. In an embodiment a flange is arranged to the end of the axle housing and a counter flange is arranged to the hub motor arrangement. The counter flange may be arranged to the hub motor arrangement in a position so that the electric motor of the hub motor arrangement may be arranged in the space of the axle housing when the hub motor arrangement is attached to flange of the end of the axle housing.

In an embodiment of the powertrain support arrangement the axle housing may be arranged on a cradle. An advantage is that the powertrain support may be arranged to be supported freely or according to movements of the cradle. This may make a possibility to modify traditional concepts utilising a cradle with the present powertrain support arrangement.

In an embodiment of the powertrain support arrangement the cradle and/or the axle housing is arranged to the frame to swing and/or rotate in relation to an oscillating axis. An advantage is that the powertrain arrangement may be arranged to be supported and oscillating is relation to the oscillating axis of the cradle.

In an embodiment of the powertrain support arrangement the axle housing may be arranged on the cradle and at least one outboard support element may be arranged around the axle housing and extending to the cradle and/or at least one inboard support element may be arranged around the axle housing and extending to the cradle. An advantage is that the axle housing may be fixedly mounted to the cradle, by support parts e.g., by the outboard support element, the inboard support element, and a firm connection may be formed between the axle housing and the support elements and the cradle. The connection may be configured according to the embodiment to withstand forces and stress of the mobile underground mining machine. The cradle may be arranged to swing and/or rotatable to the frame e.g., by an oscillation bearing. In an embodiment the oscillation bearing may be a cradle bearing, such as a spherical bearing.

In an embodiment of the powertrain support arrangement a suspension device may be arranged between the axle housing and the frame and/or the chassis of the mobile underground mining machine, and/or a suspension device may be arranged between the cradle and the frame and/or the chassis of the mobile underground mining machine. An advantage is that the powertrain support arrangement may be arranged to the frame to be supported freely or supported to swing and/or rotate in relation of the oscillating axis.

In an embodiment of the powertrain support arrangement the suspension device may be one of following: an active suspension device, a passive suspension device, a spring device, a damper device, a pneumatic device, a hydraulic device, or a combination of two or more of the abovementioned devices.

According to a second aspect the present invention provides a mobile underground mining machine. According to the invention the mobile underground mining machine comprises a powertrain support arrangement according to any one of embodiments mentioned above or below, or a combination of two or more of the embodiments mentioned above or below. An advantage is that by using the powertrain support arrangement with the hub motor arrangement in the mobile underground mining machine a compact structure that is suitable for withstand forces, such as torque, of the mobile underground mining machine may be achieved. This may also make the design, construction, assembly, and maintenance of the mobile underground mining machine easier than the mobile underground mining machine provided with the traditional drive shaft, such as the cardan axle. The structure of the powertrain support arrangement with the hub motor arrangement is a compact structure that may make an enhanced effective hauling capacity of a mobile underground mining machine. On the other hand, by using the powertrain support structure with the hub motor arrangement in the mobile underground mining machine it may be possible to make the mobile underground mining machine more compact than traditional mobile underground mining machines with drive shafts, such as cardan axles.

In an embodiment of the powertrain support arrangement the arrangement may be arranged as a retrofit to a used machine, or the arrangement may be utilised in an assembly of a new machine.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic side view of a mobile underground mining machine,
**Figure 2** is a schematic view of a support arrangement,
**Figure 3** is a schematic top view of an embodiment of a support arrangement
**Figure 4** is a schematic cross section of an embodiment of the support arrangement in a horizontal plane of a mobile underground mining machine.

In the figures, some embodiments are shown simplified for the sake of clarity. Similar parts are marked with the same reference numbers in the figures.

### DETAILED DESCRIPTION

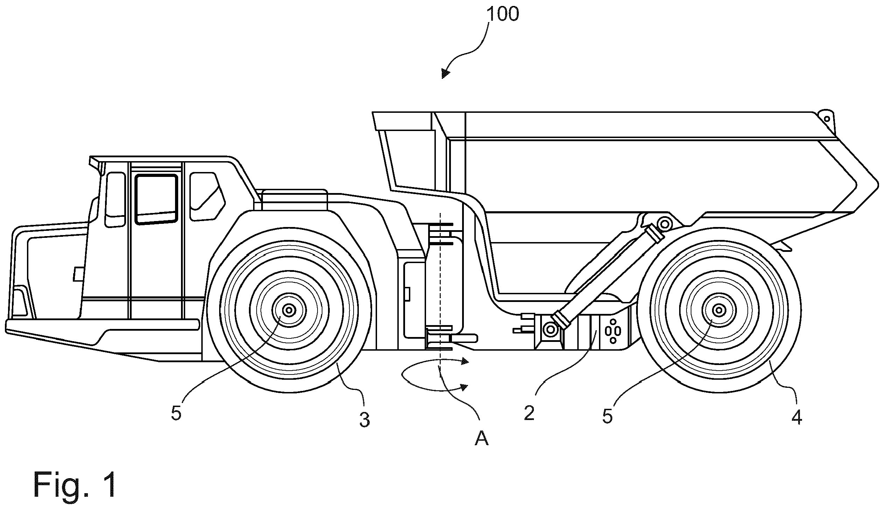

According to an aspect of the invention, the powertrain support arrangement described in this description may be arranged in a mobile underground mining machine 100. The machine may be a mine machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher, or a measuring vehicle. Figure 1 shows one example of a mobile underground mining machine 100. The mobile underground mining machine may be a mining vehicle. In an embodiment the mobile underground mining machine 100 may be equipped with a dumb bed. The drive equipment may comprise one or more drive motors and one or more power transmission means for transmitting drive power to one or more wheels 3, 4. The drive power transmission may comprise a mechanical gear system and mechanical power transmission members or, alternatively, the drive power transmission may be hydraulic or electric. In an embodiment the drive motor may be a hub motor. In an embodiment a powertrain of the mobile underground mining machine may comprise a hub motor arrangement 30.

The mobile underground mining machine 100 of the Figure 1 has four wheels 3, 4. The number of wheels may vary and instead of wheels, there may be different kind of mechanism for moving, for example a track arrangement. In an embodiment the mobile underground mining machine may comprise a frame 2. In an embodiment a front part of the mobile underground mining machine and a rear part of the mobile underground mining machine may be arranged to turn in relation to each other and in relation to a vertical axis A.

In an embodiment of a powertrain support 1 arrangement for a mobile underground mining machine 100 the arrangement is comprising an axle housing 6, arranged transversely to a longitudinal axis of the mobile underground mining machine 100. The longitudinal axis of the mobile underground mining machine may be a main moving direction of the mobile underground mining machine. The axle housing 6 may comprise a first end 7 and a second end 7'. A wall 6' of the axle housing 6 may be arranged to extend from the first end 7 to the second end 7' of the axle housing 6 and connecting the first end 7 to the second end 7'. On the first end 7 of the axle housing may be arranged a support surface 8 for a hub motor arrangement 30. On the second end 7' of the axle housing 6 may be arranged a support surface for a second hub motor arrangement. In an embodiment of the powertrain support arrangement of the mobile underground mining machine 100 a space 17 for at least a part of the hub motor arrangement 30 may be arranged inside the axle housing 6. In an embodiment the space 17 may be a channel space formed in the axle housing. In an embodiment a plurality of space compartments may be arranged in the axle housing.

In an embodiment the axle housing 6 may be arranged on a frame 2 of the mobile underground mining machine.

In an embodiment the axle housing 6 may be fixedly mounted to the frame 2 or chassis of the mobile underground mining machine 100. The axle housing 6 may be of heavy-duty construction to support the loads of the mobile underground mining machine and of suitable configuration and parts.

In an embodiment the axle housing 6 may be of a tube part or a pipe part, or a hollow section. In an embodiment a cross section of the axle housing 6 may be cylindrical annular shape. In an embodiment the axle housing 6 may have a wall 6' having an outer surface and an inner surface. The inner surface of the wall 6' of the axle housing may define the space 17 formed in the axle housing 6. An axis of the axle housing may be a line between a centre of the first end and a centre of the second end. The cross section of the axle housing 6 may be a cross section according to a plane that is normal to the axis of the axle housing. In an embodiment a cross section of the axle housing 6 may be of rectangular, polygonal, ellipsoidal, or other suitable form. In an embodiment a diameter of the cross section the axial housing may be substantially constant between the first end 7 and the second end 7' of the axle housing 6. In an embodiment a diameter of the axial housing may vary between the first end 7 and the second end 7' of the axle housing. In an embodiment a flange may be arranged on the first end of the axle housing and/or on the second end of the axle housing. In an embodiment the axle housing 6 may be a tube part, wherein the space 17 is a channel space arranged inside a wall 6' of the axle housing. In an embodiment the channel space may be extending from the first end 7 of the axle housing 6 to the second end of the axle housing. In an embodiment a plate member provided with threads may be arranged in a first end 7 and/or the second end 7' of the axle housing 6. The axle housing 6 may be provided with counter threads for the plate member. The plate member may be used instead of the flange in the first end 7 and/or second end 7' of the axle housing 6.

In an embodiment the axle housing may be of metal e.g., cast or rolled steel.

In an embodiment openings 12, 13 may be arranged to the wall 6' of the axle housing 6 from outside to the space 17 inside of the axle housing. In an embodiment cables and/or pipes may be arranged through an opening 12 to the space 17 of the axle housing 6. In an embodiment pipes and/or cables may be arranged through the opening 12 of the axle housing to the drive device, such as a motor of the hub motor arrangement. In an embodiment of the axle housing 6 the opening 13 may be for cleaning or for removing water from the channel space of the axle housing 6. The opening 12, 13 may be provided with a covering plate, a lid, or a cap. In an embodiment the space 17 of the axle housing 6 may be a hermetically sealed space.

In an embodiment at each end 7, 7' of the axle housing 6 may be arranged a hub motor arrangement. The hub motor arrangement 30 may comprise a hub motor 38, e.g., an electric motor, a gear 31, and a hub 5 for connecting a wheel 3, 4.

In an embodiment the hub motor arrangement may comprise a gear that changes gear ratio. However, in another embodiment, the hub arrangement may transmit power without changing gear ratio.

In an embodiment the axle housing may be arranged to the frame 2 of the mobile underground mining machine by welding.

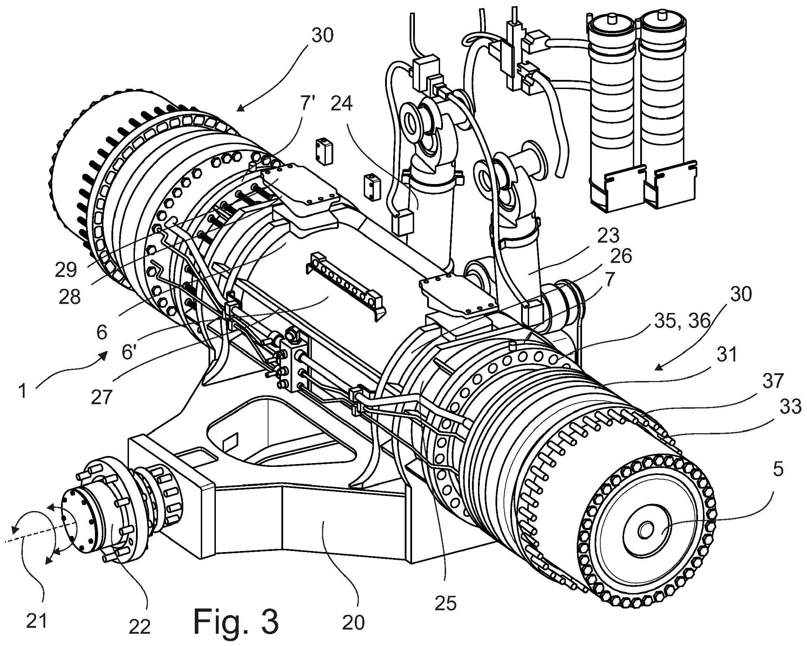

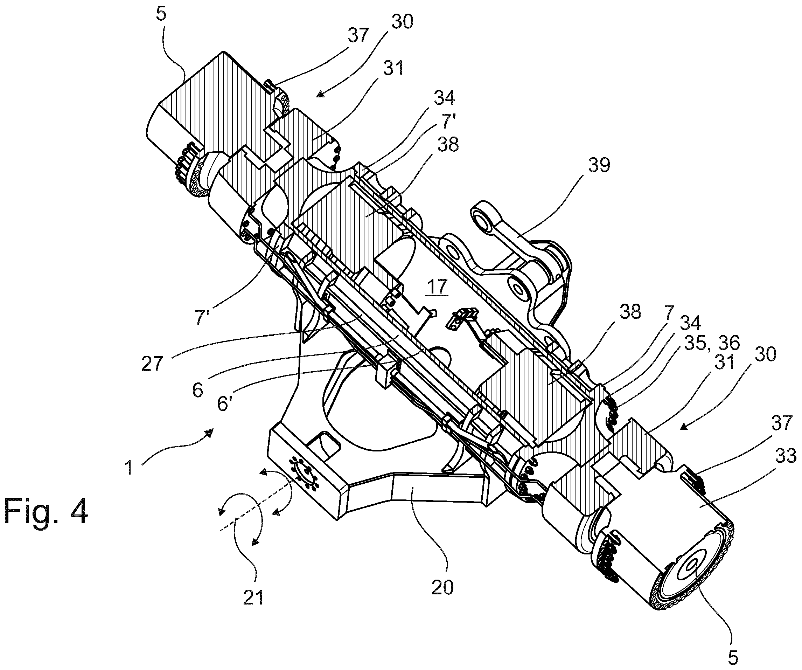

In an embodiment of the powertrain support arrangement an electric motor of a first hub motor arrangement 30 may be arranged in the space 17 of the axle housing 6 and may be attached in the first end 7 of the axle housing 6. In an embodiment an electric motor of the second hub motor arrangement may be arranged in the space of the axle housing and may be attached in the second end 7' of the axle housing 6. Some embodiments of connection of the hub motor arrangement to an axle housing of the powertrain support arrangement 1 are illustrated in Figure 3 and in Figure 4.

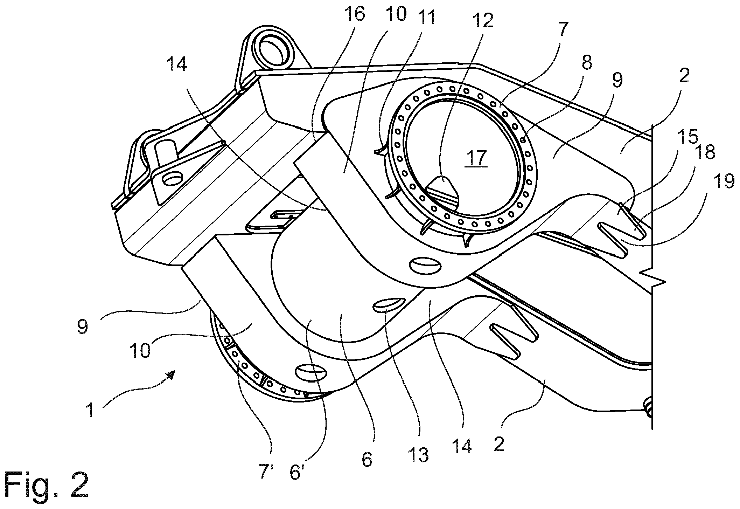

In an embodiment of figure 2 the axle housing 6 may be arranged to the frame 2 of the mobile underground mining machine via a structure that comprises an outboard support 9, an inboard support 14 and a lower support 10. The outboard support 9 and the inboard support 14 may be arranged at a distance from each other in a direction of a longitudinal axis of the axle housing 6. The lower support 10 may be arranged to extend between the outboard support 9 and the inboard support 14 and connecting the outboard support to the inboard support. The outboard support 9 and the inboard support 14 may be connected to frame of the mobile underground mining machine. In an embodiment the outboard support 9 may be part of the frame 2. In an embodiment the outboard support 9 may be combined to frame 2. In an embodiment the outboard support 9 may be part of the outboard side of the frame 2. In an embodiment the inboard support 14 may be part of the frame 2. In an embodiment the lower support 10 may be part of the frame 2. In an embodiment the lower support 10 may be combined to frame 2, for example to a lower part of the frame, such as to a base plate of the frame 2.

In an embodiment support parts may be arranged for attaching the axle housing 6 to the frame 2 of the mobile underground mining machine. In an embodiment support parts may comprise an outboard support 9 and an inboard support 14. In an embodiment the outboard support 9 and the inboard support 14 may be arranged at a distance from each of the first end 7 of the axle housing and from the second end 7' of the axle housing, respectively. The distance may be in the axial direction of the axle housing. A lower support 10 may be arranged between the inboard support 14 and the outboard support 9 and connecting the inboard support 14 and outboard 9 support. In an embodiment the inboard support and the outboard support may be plate like supports having an opening. The axle housing 6 may be arranged through the opening, so that the inboard support 14 and the outboard support 9 are extending from an outer surface of the axle housing 6. In figure 2 is illustrated some embodiments of the arrangement. In an embodiment the arrangement may be arranged to the frame 2 having a plurality of longitudinal frame parts. In an embodiment the axle housing 6 may be arranged to the frame 2 of the mobile underground mining machine via a plurality structures, each of the structures may comprise an outboard support 9, an inboard support 14 and a lower support 10, the inboard support 14 and the outboard support 9 arranged at a distance from each other, and the lower support 10 is arranged to extend between the outboard support 9 and the inboard support 14.

In an embodiment the powertrain support arrangement the outboard support 9 may be arranged to an outboard side of the frame 2, and the inboard support 14 may be arranged on an inboard side of the frame 2, and the lower support 10 may be arranged on a lower part of the frame 2. In an embodiment a first end 15 of the lower support 10 may be arranged on a lover surface of the frame 2. In an embodiment the first end 15 of the lower surface 9 may be configured to comprise wedge-shaped projections 18 and a gap 19 between the wedge-shaped projections 18. The wedge-shaped projections may be tapering towards end that is a tip of each projection. The gap 19 between the wedge-shaped projections may be tapering from the tip of the projections to an end of the gap. In an embodiment this kind of first end 15 with the wedge-shaped projections 18 and the gap 19 between the projections 18 makes possible to configure welds between the lower support and the frame 2 to withstand forces and stress acting to the powertrain support structure. The axle housing 6 may be arranged between the frame 2 and the lower support 10.

In an embodiment different support parts of the arrangement may be fastened to the frame by welding. In an embodiment different parts may be connected to each other by fastening means, for example by nuts and bolts. In an embodiment different parts may be connected to each other by fastening means and by welding. In an embodiment additional parts may be used when connection parts by welding. In an embodiment connecting parts 11 may be arranged on a connection area of a first end 7 and/or a second end 7' of the axle housing 6 and a support structure, such as for outboard support 9. In an embodiment the connecting parts may be arranged on a circumference of the outer surface of the axle housing 6 in a connection area between the axle housing and the outboard support 9. The powertrain structure arrangement having a connection of this kind may better withstand torque, stress, and forces. In an embodiment the axle and optionally its support structures may be made by casting.

In an embodiment of the powertrain arrangement the axle housing 6 may be arranged on a frame 2 of the mobile underground mining machine 100 to be swing and/or rotate in relation to an oscillating axis 21 of the powertrain support arrangement.

In an embodiment the axle housing 6 may be arranged on a cradle 20.

In an embodiment the cradle 20 and/or the axle housing 6 may be arranged to the frame 2 to swing and/or rotate around an oscillating axis 21.

In an embodiment the axle housing 6 may be arranged on the cradle 20 and at least one outboard support element 25 may be arranged around the axle housing 6 and extending to the cradle 20. In an embodiment at least one inboard support element 26 may be arranged around the axle housing 6 and extending to the cradle 20. In an embodiment the cradle may comprise a first support portion and a second support portion and a first end portion connecting the first support portion and the second support portion. The oscillation axis 21 may be arranged through the first end portion.

In an embodiment a suspension device 23, 24 may be arranged between the axle housing 6 and the frame 2 and/or the chassis of the mobile underground mining machine, and/or a suspension device 23, 24 may be arranged between the cradle 20 and/or the frame 2 and/or the chassis of the mobile underground mining machine.

In an embodiment the suspension device 23, 24 may be one of following: an active suspension device, a passive suspension device, a spring device, a damper device, a pneumatic device, a hydraulic device, or a combination of two or more of the abovementioned devices. In an embodiment is may be possible to control and adjust the suspension of the powertrain arrangement of the mobile underground mining machine. In an embodiment it may be possible to control and adjust the oscillation of the powertrain support arrangement. In an embodiment a first end of the suspension device 23, 24 may be arranged on the cradle 20 or on the axle housing 6 and a second end of the suspension device may be arranged on the frame 2 or the chassis of the mobile underground mining machine. The suspension devices may be arranged to suspend in a vertical direction. The suspension devices may be arranged to also suspend the swinging of the axle or the cradle. In an embodiment a suspension device e.g., a suspension link 39, such as a Panhard rod, may be arranged to support in a lateral direction. In an embodiment a first end of the suspension link 39 may be arranged on the cradle 20 or on the axle housing 6 and a second end of the suspension link may be arranged on the frame 2 or the chassis of the mobile underground mining machine. In an embodiment it may be possible to control and adjust the oscillation of the cradle 20 and/or the axle housing 6 in relation to the oscillation axis 21. In an arrangement it may be possible to control and adjust the swinging and/or rotation of the cradle and/or the axle housing 6 in relation to the oscillation axis 21 with the cradle bearing 22. In an embodiment the cradle bearing 22 may be a spherical bearing e.g., a ball joint. The cradle 20 may be arranged to the frame 20 of the mobile underground mining machine via the cradle bearing 22. The cradle bearing 22 may have connecting elements for attaching the cradle bearing and the cradle to the frame of the mobile underground mining machine.

In an embodiment of the powertrain support arrangement a rib 27 may be arranged on an axle housing. The rib 27 may be a reinforcing rib. In an embodiment a plurality of ribs 27 may be arranged on a wall 6' of the axle housing. In an embodiment the rib 27 may be arranged extending between the first end 7 and the second end 7' of the axle housing. In an embodiment the rib may be arranged between the inboard support elements 26 of the powertrain support structure. In an embodiment the rib may be arranged on an outer surface of the wall 6' of the axle housing 6.

In an embodiment the axle housing 6 may be provided by a movement limiter 28. In an embodiment of figure 3 two movement limiters 28 have been arranged on the axle housing 6. A counter element 29 for the movement limiter 28 may be arranged on the frame or the chassis of the mobile underground mining machine. In an embodiment the movement limiters 29 may be arranged to limit a vertical movement of the axle or the cradle to the frame or to chassis.

At each end of the axle housing 6 may be one of the hub motor arrangements 30 well as power transmission, brake and housing components that facilitate mounting and rotation of the wheels 3, 4. In some embodiments, these components at each end of the axle housing 6 are identical or mirror image parts such that the components at only one end of the axle housing 6 will be detailed herein. It should be understood that the description below of the first end 7 of the axle housing 6 may thus be considered a description of the corresponding components at the second end 7' end of the axle housing 6. It should also be understood that in some embodiments the components at the first end of the axle housing 6 may differ from those at the second end.

In an embodiment a first hub motor arrangement is mounted (e.g., bolted) with connecting elements 35, 36 in fixed position to the first end and a second hub arrangement to the second end of the axle housing 6. The hub motor arrangement may have a generally cylindrical geometry. The wheels 3, 4 may be arranged to be connected to a wheel head 33 of the hub motor arrangement via wheel fastening elements 37. The wheel head of the hub motor arrangement is rotated by the hub motor i.e., the electric motor 38 of the hub motor arrangement possible via the speed transforming transmission 31 i.e., the gear.

In an embodiment of the hub motor arrangement a drive may be an electric drive and may include an electric motor 38 at least partially, if not entirely, positioned within the space 17 of the axle housing 6.

In an embodiment the electric drive of the hub motor arrangement may be powered by, or part of, the power train and receives power from the prime power source of the mobile underground mining machine. In an embodiment, the prime power source may be a battery or batteries. The electrical power may be stored in the one or more batteries. In an embodiment, the prime power source may be an engine, which provides mechanical power that is converted to electrical power through the power conversion components and the one or more batteries of the power train. In the claims term powertrain may comprise hub motors e.g., an electric motor, possible gear, a hub wheel i.e., a hub. There may be also other components in the powertrain that may not be placed in the power train support arrangement but placed in other location of the mobile underground mining machine.

In an embodiment of the powertrain support arrangement the arrangement may be arranged as a retrofit to a used mobile underground mining machine. In an embodiment of the powertrain support arrangement the arrangement may be utilised in an assembly of a new mobile underground mining machine.

It is obvious to a person skilled in the art that with the advancement of technology, the basic idea of the invention may be implemented in various ways. The invention and its embodiments are thus not limited to the examples described above, instead they may vary within the scope of the claims.

**Reference symbols**
- 1: Powertrain support arrangement
- 2: Frame
- 3: Wheel
- 4: Wheel
- 5: Hub
- 6: Axle housing
- 6': Wall of the axle housing
- 7: First end of the axle housing
- 7': Second end of the axle housing
- 8: Support surface
- 9: Outboard support
- 10: Lower support
- 11: Support part
- 12: Opening
- 13: Opening
- 14: Inboard support
- 15: First end of the lower support plate
- 16: Second end of the lower support plate
- 17: Space of the axle housing
- 18: Projection
- 19: Gap
- 20: Cradle
- 21: Oscillating axis
- 22: Cradle bearing
- 23: First suspension device
- 24: Second suspension device
- 25: Outboard support element
- 26: Inboard support element
- 27: Rib
- 28: Movement limiter
- 29: Counter element
- 30: Hub motor arrangement
- 31: Speed transforming transmission
- 33: Wheel head
- 34: Counter surface
- 35: Connecting element
- 36: Connecting element
- 37: Wheel fastening elements
- 38: Electric motor
- 39: Suspension link
- 100: Mobile underground mining machine A Vertical axis

## Claims

1. A powertrain support arrangement (1) of a mobile underground mining machine (100), wherein the arrangement (1) comprising an axle housing (6), arranged transversely to a longitudinal axis of the mobile underground mining machine (100), the axle housing (6) comprising a first end (7) and a second end (7'), on the first end of the axle housing is arranged a support surface (8) for a hub motor arrangement (30) and on the second end of the axle housing is arranged a support surface for a second hub motor arrangement (30), and wherein a space (17) for at least a part of the hub motor arrangement is arranged inside the axle housing.

2. The powertrain support arrangement according to claim 1, wherein the axle housing is arranged on a frame (2) of the mobile underground mining machine (100).

3. The powertrain support arrangement according to claim 1 or 2, wherein the axle housing (6) is arranged on a frame (2) of the mobile underground mining machine (100) to be swing in relation to an oscillating axis (21) of the powertrain support arrangement.

4. The powertrain support arrangement according to any one of claims 1 to 3, wherein the axle housing (6) is a tube part, wherein the space (17) is a channel space arranged inside a wall (6') of the axle housing (6).

5. The powertrain support arrangement according to any one of claims 1 to 4, wherein an electric motor (38) of the first hub motor arrangement (30) is arranged in the space (17) of the axle housing (6) and attached in the first end (7) of the axle housing (6) and/or an electric motor of the second hub motor arrangement is arranged in the space of the axle housing and attached in the second end (7') of the axle housing (6) .

6. The powertrain support arrangement according to any one of claims 1 to 5, wherein the axle housing (6) is arranged to the frame (2) of the mobile underground mining machine via a structure comprising an outboard support (9), an inboard support (14) and a lower support (10), wherein the outboard support (9) and the inboard support (14) are arranged at a distance from each other in a direction of a longitudinal axis of the axle housing (6), and the lower support (10) is arranged to extend between the outboard support (9) and the inboard support (14) connecting the outboard support to the inboard support.

7. The powertrain support arrangement according to claim 6, wherein the axle housing (6) is arranged to the frame (2) of the mobile underground mining machine via a plurality of structures, each of the structures comprises an outboard support (9), an inboard support (14) and a lower support (10), the outboard support (9) and the inboard support (14) arranged at a distance from each other in a direction of a longitudinal axis of the axle housing (6), and the lower support (10) is arranged to extend between the outboard support (9) and the inboard support (14).

8. The powertrain support arrangement according to any one of claims 1 to 7, wherein the outboard support (9) is arranged to or is a part of an outboard side of the frame, and the inboard support (14) is arranged on or is a part of an inboard side of the frame, and the lower support (10) is arranged on or is a part of a lower part of the frame.

9. The powertrain support arrangement according to any one of claims 1 to 8, wherein the powertrain comprises a hub motor arrangement (30), comprising a counter surface (37) for fastening the hub motor arrangement to the support surface (8) of the end (7) of the axle housing (6).

10. The powertrain support arrangement according to any one of claims 1 to 9, wherein the axle housing (6) is arranged on a cradle (20).

11. The powertrain support arrangement according to any one of claims 1 to 10, wherein the cradle (20) and/or the axle housing (6) is arranged to the frame (2) to swing and/or rotate in relation to an oscillating axis (21).

12. The powertrain support arrangement according to any one of claims 1 to 11, wherein the axle housing is arranged on the cradle (20) and at least one outboard support element (25) is arranged around the axle housing (6) and extending to the cradle (20) and/or at least one inboard support element (26) is arranged around the axle housing (6) and extending to the cradle (20).

13. The powertrain support arrangement according to any one of claims 1 to 12, wherein a suspension device (23, 24, 39) is arranged between the axle housing (6) and the frame (2) and/or the chassis of the mobile underground mining machine, and/or a suspension device (23, 24, 39) is arranged between the cradle (20) and/or the frame (2) and/or the chassis of the mobile underground mining machine.

14. The powertrain support arrangement according to any one of claims 1 to 13, wherein the suspension device (23, 24, 39) is one of following: an active suspension device, a passive suspension device, a spring device, a damper device, a pneumatic device, a hydraulic device, or a combination of two or more of the abovementioned devices.

15. A mobile underground mining machine, wherein the mobile underground mining machine (100) comprises a powertrain support arrangement (1) according to any one of claims 1 to 14.
